# EUROPEAN PATENT APPLICATION

(11) **EP 1 093 275 A2**
(43) Date of publication of application: **18.04.2001**
(21) Application number: 00308693.1
(22) Date of filing: 03.10.2000
(51) Int. Cl.: H04M 1/57

(54) **Selective caller ID blocking**

(30) Priority: 15.10.1999 US 418939
(71) Applicant: LUCENT TECHNOLOGIES INC., Murray Hill, New Jersey 07974-0636 (US)
(72) Inventor: McDowell, Richard Lawrence, Chalfont, Pennsylvania 18914 (US); Mooney, Philip D., North Wales, Pennsylvania 19454 (US)
(74) Representative: Watts, Christopher Malcolm Kelway, Dr.

(57) **Abstract**

A new calling feature allows a calling party to only block the transmission of the calling party's telephone number but not block the transmission of the calling party's identity. In a particular exemplary embodiment of a telephone system according to the invention, a method of identifying a calling party includes the step of providing the calling party an option to send identifying information limited to information other than the calling party's telephone number. In an alternative embodiment of a telephone system according to the invention, a calling party is identified by the step of providing a called party with identification information of the calling party, wherein said information is limited to include data other than the calling party's telephone number. In another alternative embodiment according to the invention, a telephone includes a controller and a display, wherein the display is adapted to display a name of a calling party and information regarding a status of the calling party's telephone number. The status may be, for example, that the calling party's telephone number is unlisted, or that the calling party is blocking transmission of the calling party's telephone number. In yet another alternative embodiment according to the invention, a telephone switch is adapted to provide calling party information to a called party, wherein the calling party information does not include a telephone number of a calling party.

## Description

### Field of the Invention:

The invention is related to the field of telephony, and in particular to the Caller ID feature by which a called party is notified of the identity of an incoming caller.

### Background of the Invention:

Calling Number Identity, commonly referred to as Caller ID, is a feature by which a called party is provided with call related information associated with an incoming call. Typically, the call related information includes a telephone number associated with a telephone from which the incoming call is placed, and may also include a name of a party associated with the calling telephone. Caller ID is governed in the United States by various Bellcore standards, incorporated herein by reference, and is governed by similar standards throughout the world.

Some calling parties, in particular people with unlisted telephone numbers or certain businesses, do not necessarily want a called party to know their telephone number. A blocking feature is provided by which these parties may block their Caller ID data from being transmitted to the called party. Details of the blocking feature are provided in Bellcore standards, such as, TR-NWT-001188, incorporated herein by reference.

Some people review Caller ID data associated with incoming calls to engage in a practice known as call screening, whereby they selectively answer incoming calls based on the Caller ID data associated therewith. This practice may be performed by the called party on a call-by-call basis, whereby the called party reviews a display when alerted to the presence of an incoming call, and then elects to either respond to the incoming call or ignore the incoming call, depending on the displayed data. Alternatively, call screening may be performed automatically, whereby a telephone is programmed to only recognize calls from particular parties, or a central device, such as a central office switch, is programmed to only forward telephone calls from particular parties.

One example of this automated practice is a feature whereby a called party may elect to only receive calls from other parties that do not block their Caller ID data. According to this feature, if a Caller ID blocking party is calling, then the calling party will be informed that the called party does not receive calls from blocked parties. At this point, if the calling party still wants to make contact with the called party, the calling party must terminate the call by transitioning to an on-hook status, cancel the blocking feature by, for example, pressing a predetermined key sequence, and then place a new telephone call to the called party. Alternatively, the calling party may be given the opportunity to provide identifying information, such as verbally speaking the calling party's name, which will be recorded and presented as an audio clip to the called party for call screening purposes. These alternative methods of automatic screening are described, for example, in Bellcore standards, such as TR-NWT-001188, incorporated herein by reference.

The above features are overly complicated and inadequate for a person who just wants to know who is calling before taking time to answer an incoming call. This person may not want to put in place a formal call screening process, in part because it is complicated, and in part because it may be perceived as inconveniencing the incoming caller. There is a need, therefore, for a simplified feature to enable a called party to perform call screening of incoming calls if the called party simply wants to know the identity of the incoming caller. Similarly, there is a need for a feature to enable a calling party to engage in blocking when the calling party only wants to block particular information, such as the calling party's telephone number.

### Summary of the Invention:

This need is met by a new calling feature that allows a calling party to only block the transmission of the calling party's telephone number but not block the transmission of the calling party's identity. In a particular exemplary embodiment of a telephone system according to the invention, a method of identifying a calling party includes the step of providing the calling party an option to send identifying information limited to information other than the calling party's telephone number. In an alternative embodiment of a telephone system according to the invention, a calling party is identified by the step of providing a called party with identification information of the calling party, wherein said information is limited to include data other than the calling party's telephone number.

In another alternative embodiment according to the invention, a telephone includes a controller and a display, wherein the display is adapted to display a name of a calling party and information regarding a status of the calling party's telephone number. The status may be, for example, that the calling party's telephone number is unlisted, or that the calling party is blocking transmission of the calling party's telephone number.

In yet another alternative embodiment according to the invention, a telephone switch is adapted to provide calling party information to a called party, wherein the calling party information does not include a telephone number of a calling party.

### Brief Description of the Drawing:

Objects and advantages of the invention will be apparent to one of skill in the art upon review of the following detailed description in light of the drawing, wherein:
Figure 1 is a top level diagram depicting an environment within which the invention may be employed;
Figure 2 is a simplified exemplary operational flowchart according to the invention;
Figure 3 is an alternative exemplary operational flowchart according to the invention; and
Figure 4 is a simplified block diagram of a telephone adapted according to one embodiment of the invention.

### Detailed Description:

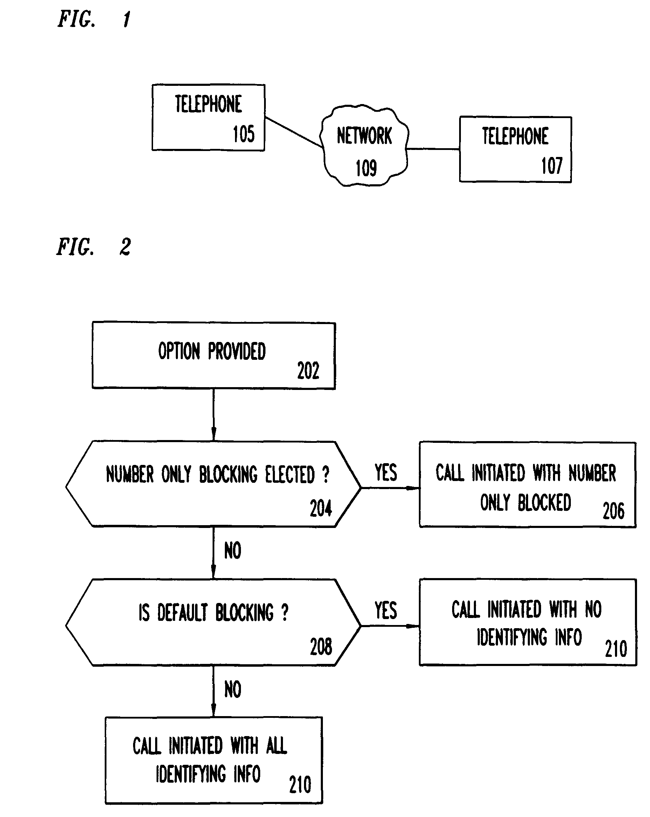

Figure 1 is a top level diagram depicting an environment within which the invention may be employed. In particular, a first telephone 105 and a second telephone 107 are each coupled to a network 109, such as a public switched telephone network. The network 109 may be any type of network, such as an internet or cellular network, and the couplings between the network 109 and the telephones 105/107 may be wired, such as via a telephone line interface in telephones 105/107, or may be wireless.

According to the invention, when one of the telephones 105/107 is used to place a telephone call as a calling party, and the other telephone is an intended recipient of the call as the called party, then the calling party is provided with an option to send identifying information limited to information other than the calling party's telephone number. This option may be provided universally, such that the calling party can put a "number only blocking" feature in place for all outgoing calls, or may be put in place on a per call basis, such that the calling party has the option to block the calling party's telephone number as part of the process of initiating a telephone call.

Figure 2 is a simplified exemplary operational flowchart according to the invention. At step 202, a calling party is provided the option of number only blocking. In an example where this feature is set for all calls, the option at step 202 may be provided at a time when no particular outgoing call is being established. Alternatively, if the calling party is provided this option on a per call basis, then the calling party will provide an indication of the calling party's choice as part of the process of initiating an outgoing call. For example, the calling party may precede a telephone number of a called party with a particular sequence, such as *-2-2, which is understood by the network 109 to indicate that number only blocking has been elected.

In either case, at step 204 a determination is made as to whether number only blocking is in place. If it is, then at step 206 a telephone call is initiated with only the number blocked, i.e., with all identifying information other than the number being provided with the telephone call, and hence being observable or otherwise knowable to the called party.

If the determination at step 204 is that number only blocking is not in place, then at step 208 a determination is made as to whether general call blocking is in place. If the answer is YES, then the outgoing call is initiated at step 210 with no identifying information being provided. If, on the other hand, the determination is that general call blocking is not in place, then at step 212 an outgoing call is initiated with all identifying information being provided and hence observable or otherwise knowable to the called party.

The process described in Figure 2 may be performed, for example, by a central device within network 109. An exemplary central device is a 5ESS switch available from Lucent Technologies, Inc. The process, in such a case, is implemented by altering conventional programming of such a device to operate according to the invention. Given an understanding of the invention, the particular programming steps are well within the ability of one of ordinary skill in the art, and are thus not set forth herein.

The process described in Figure 2 may also be performed, for example, in the calling telephone (telephone 105 or telephone 107), depending on the particular network and instrumentation implementation. In such a case, the conventional programming of a processor, such as a digital signal processor, within the calling telephone, may be altered readily by one of ordinary skill in the art, to effectively implement the invention.

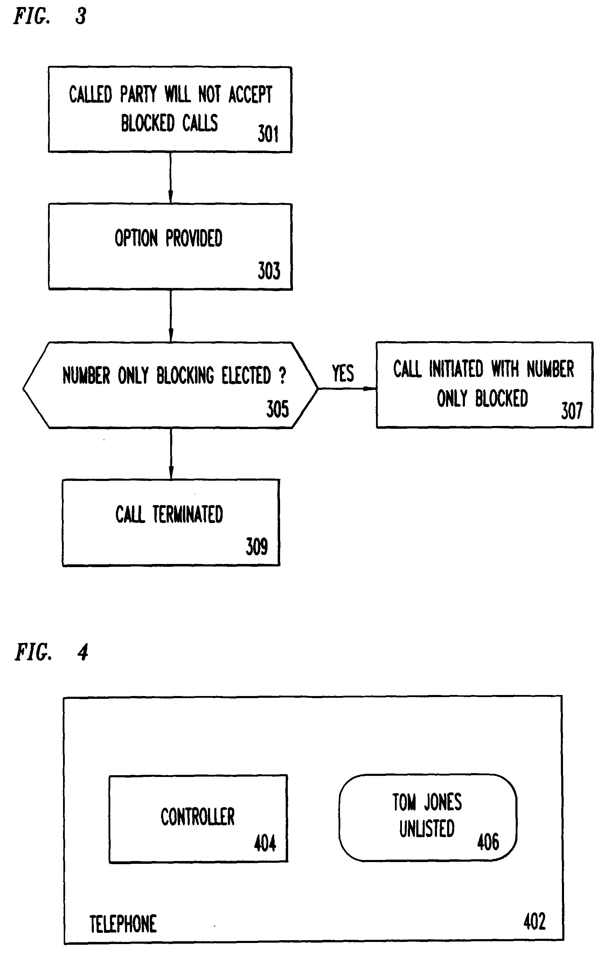

Figure 3 is an alternative exemplary operational flowchart according to the invention. At step 301, a determination is made that a called party will not accept blocked calls. At this point, general call blocking is in place and the calling party has attempted to place an outgoing call. At step 303, the calling party is presented an option to change the status, at least for the attempted call, from call blocking to number only blocking. At step 305, a determination is made as to whether the calling party has elected to proceed with the number only blocking option.

The mechanism for steps 303 and 305 may be, for example, an audible indicator provided to the incoming caller, such as a message that the incoming caller hears from a speaker in the incoming caller's telephone, that informs the incoming caller of a specific action to take if the incoming caller wants to proceed with a number only blocking call. The specific action may be, for example, the activation of a particular key on a keypad associated with the incoming caller's telephone, resulting in a corresponding dual tone multifrequency signal being transmitted to the network 109. An alternative example of the specific action may be the verbal announcement of a particular term, such as "YES", which can then be interpreted by a speech recognition module within the network 109.

In any event, if the determination at step 305 is that the calling party elects to proceed with a number only blocking telephone call, then at step 307 a telephone call is initiated to the called party with identifying information other than the calling party's telephone number. If, on the other hand, the determination at step 305 is that the calling party elects not to proceed with a number only blocking telephone call, such as is the case if the calling party does not want any identifying information to be presented to the called party, then at step 309 the call is terminated.

The process of Figure 3 may be enhanced, in another alternative embodiment according to the invention, by preceding step 303 with a request to the called party as to whether the called party will accept a number only blocking telephone call. This request may be an automatic query, such as a review of a look-up table, to determine a selection made by the called party. Such a look-up table may exist, for example, in a memory of the central device within the network 109, and may thus be programmed by a user (in this case the called party) as part of the establishment of telephone services for the user's telephone.

Figure 4 is a simplified block diagram of a telephone adapted according to one embodiment of the invention. In particular, telephone 402 includes a controller, such as a digital signal processor, 404, and a display 406. According to the invention, the display 406 is adapted to display information regarding a status of a calling party's telephone. For example, as shown in Figure 4, the display 406 indicates that the incoming call from Tom Jones is coming from an unlisted telephone number, such that the status of the calling party's telephone is "unlisted." An alternative status example is that the calling party is blocking transmission of the calling party's telephone number (e.g., "NUMBER BLOCKED").

The above described embodiments of the invention are directed to a situation where the calling party does not want the called party to be presented with the calling party's telephone number as part of the calling process, but is comfortable providing the called party with some information, such as the calling party's name, to facilitate call screening by the called party. The invention is, of course, equally applicable to situations where the calling party would like to block other items of information. For example, a calling party may not want the called party to know the calling party's name, but may be comfortable with the called party knowing the calling party's telephone number, in which case a "name only blocking" feature may be implemented according to the principles of the invention.

Further, instead of blocking the entire telephone number, a portion of the telephone number may be blocked. For example, all of the telephone number except for the area code may be blocked, such that the called party's telephone shows only the area code. Alternatively, only the area code, or only the area code and the local exchange may be blocked, so that the called party's telephone shows only the last four numbers of the calling party's telephone number.

Based on an understanding of these various embodiments, one of skill in the art is likely to conceive of alternative embodiments that are not specifically enumerated here, but that are clearly within the scope of the invention.

## Claims

1. In a telephone system, a method of identifying a calling party, comprising the step of:
providing the calling party an option to send identifying information limited to information other than the calling party's telephone number.

2. A method as recited in claim 1, wherein the option is provided to the calling party in response to a determination that a called party is not responsive to an incoming call with blocked identifying information.

3. A method as recited in claim 1, further comprising the step of:
responding to a decision of the calling party by supplying a called party with identifying information that does not include the calling party's telephone number.

4. A method as recited in claim 3, wherein the decision is made on a per call basis.

5. A method as recited in claim 3, wherein the decision is set for all calls until changed by the calling party.

6. In a telephone system, identifying a calling party, comprising the step of:
providing a called party with identification information of a calling party, wherein said information is limited to include data other than the calling party's telephone number.

7. A method as recited in claim 6, further comprising the step of determining that the called party will accept a call containing identification information that does not include the calling party's telephone number.

8. A method as recited in claim 7, wherein the determining step occurs before the providing step.

9. A method as recited in claim 7, further comprising the initial steps of:
providing no identification information regarding the calling party; and
determining that the called party will not accept a call containing no identification information.

10. A method as recited in claim 9, further comprising the steps of:
providing information to the calling party that the called party will not accept a call containing no identification information; and
receiving authorization from the calling party to supply identification information not including the calling party's telephone number.

11. A telephone, comprising:
a controller; and
a display,
wherein the display is adapted to display a name of a calling party and information regarding a status of the calling party's telephone number.

12. A telephone as recited in claim 11, wherein the status is that the calling party's telephone number is unlisted.

13. A telephone as recited in claim 11, wherein the status is that the calling party is blocking transmission of the calling party's telephone number.

14. A telephone as recited in claim 11, wherein the controller is adapted to output an indication that the telephone will accept a telephone call containing calling party identification information that does not include a telephone number.

15. A telephone as recited in claim 14, wherein the controller is further adapted to respond to a call containing no calling party identification information with an indication that the telephone will not accept the call, and is adapted to output the indication that the telephone will accept a call containing calling party information that does not include a telephone number in response to a related query.

16. A telephone switch adapted to provide calling party information to a called party, wherein the calling party information does not include a telephone number of a calling party.

17. A telephone switch as recited in claim 16, further adapted to determine that the called party will not accept calls with no calling party information.

18. A telephone switch as recited in claim 17, further adapted to determine that the calling party authorizes the provision of calling party information that does not include the calling party's telephone number.

19. A telephone switch as recited in claim 18, further adapted to determine that the called party will accept telephone calls that contain calling party information that does not include the calling party's telephone number.

20. In a telephone system, identifying a calling party, comprising the steps of:
blocking a portion of a set of data containing information related to a calling party to yield a selected subset of the information; and
providing a called party with the selected subset.

21. A method as recited in claim 20, wherein the selected subset does not include a name of the calling party.

22. A method as recited in claim 20, wherein the selected subset does not include a telephone number of the calling party.

23. A method as recited in claim 20, wherein the selected subset does not include a portion of a telephone number of the calling party.

24. A method as recited in claim 23, wherein the portion includes an area code.

25. A method as recited in claim 23, wherein the portion includes a local exchange number.

26. A method as recited in claim 23, wherein the portion includes a calling party's extension telephone number.
